# EUROPÄISCHE PATENTSCHRIFT

(11) **EP 3 922 900 B1**
(45) Veröffentlichungstag und Bekanntmachung des Hinweises auf die Patenterteilung: **30.07.2025**
(21) Anmeldenummer: 21177784.2
(22) Anmeldetag: 04.06.2021
(51) Int. Cl.: F17C 5/00, F17C 5/06

(54) **VERFAHREN ZUR ÜBERPRÜFUNG EINER BEI EINEM TANKVORGANG EINES FAHRZEUGS AN EINER WASSERSTOFFTANKSTELLE AN DAS FAHRZEUG ABGEGEBENEN GASMENGE EINES WASSERSTOFFS SOWIE SYSTEM AUS FAHRZEUG UND WASSERSTOFFTANKSTELLE**
METHOD FOR CHECKING A GAS QUANTITY OF A HYDROGEN DELIVERED TO A VEHICLE DURING A REFUELLING OPERATION OF THE VEHICLE, AS WELL AS SYSTEM CONSISTING OF A VEHICLE AND A HYDROGEN REFUELLING STATION
PROCÉDÉ DE VÉRIFICATION, LORS D'UN RAVITAILLEMENT D'UN VÉHICULE DANS UNE STATION DE RAVITAILLEMENT EN HYDROGÈNE, D'UNE QUANTITÉ DE GAZ D'UN HYDROGÈNE DISTRIBUÉE AU VÉHICULE, AINSI QUE SYSTÈME COMPOSÉ DE VÉHICULE ET DE STATION DE RAVITAILLEMENT EN HYDROGÈNE

(30) Priorität: 12.06.2020 DE 102020115646
(43) Veröffentlichungstag der Anmeldung: 15.12.2021
(73) Patentinhaber: Westenergie AG, 45128 Essen (DE)
(72) Erfinder: Gaul, Dr. Armin, 59379 Selm (DE); Kledewski, Ingo, 44319 Dortmund (DE)
(74) Vertreter: Bals & Vogel Patentanwälte PartGmbB

(56) Entgegenhaltungen:
- WO-A1-2019/230651
- JP-A- 2010 209 980
- US-A1- 2005 247 123
- US-A1- 2013 146 176
- US-A1- 2021 062 974
- US-A1- 2021 062 974
- US-B2- 10 295 121

## Beschreibung

Die vorliegende Erfindung betrifft ein Verfahren zur Überprüfung einer bei einem Tankvorgang eines Fahrzeugs an einer Wasserstofftankstelle an das Fahrzeug abgegebenen Gasmenge eines Wasserstoffs. Ferner betrifft die Erfindung ein System aus einem Fahrzeug und einer Wasserstofftankstelle.

Neben der Elektromobilität und der Verwendung von elektrischen Energiespeichern ist Wasserstoff einer der wichtigsten Energieträger für die zukünftige Individualmobilität. Zur Betankung der mithilfe von Wasserstoff angetriebenen Fahrzeuge sind Wasserstofftankstellen (auch als "H2-Tankstellen" bezeichnet) vorgesehen, deren Gaszähler künftig geeicht sein müssen.

Der Fahrer eines solchen mit Wasserstoff betriebenen Fahrzeugs muss sich dann auf den geeichten Gaszähler an der Wasserstofftankstelle verlassen. Wenn der Gaszähler aber defekt ist, ein Gasleck besteht oder aus anderen Gründen eine geringere als die vom Gaszähler gezählte Gasmenge an Wasserstoff in dem Fahrzeugtank des Fahrzeugs des Fahrers ankommt, die er bezahlen muss, dann steht dem Fahrer bzw. Kunden der Wasserstofftankstelle keine Überprüfungsmöglichkeit zur Verfügung. Er muss sich auf die Angabe des Betreibers der Wasserstofftankstelle verlassen.

Verfahren zur Durchführung von Tankvorgängen sind aus der US 2013/0146176 A1 sowie US 2005/0247123 A1 bekannt.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine Überprüfbarkeit der während des Tankvorgangs abgegebenen Gasmenge an Wasserstoff bereitzustellen.

Die voranstehende Aufgabe wird gelöst durch ein Verfahren mit den Merkmalen des Anspruchs 1 und durch ein System mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System und umgekehrt, sodass bezüglich der Offenbarung zu den einzelnen Erfindungsaspekten stets wechselseitig Bezug genommen wird bzw. werden kann.

Die voranstehende Aufgabe wird gemäß einem ersten Aspekt der Erfindung gelöst durch ein Verfahren zur Überprüfung einer bei einem Tankvorgang eines Fahrzeugs an einer Wasserstofftankstelle an das Fahrzeug abgegebenen Gasmenge eines Wasserstoffs. Das Verfahren weist dabei die Schritte auf:
(a) Befüllen eines Fahrzeugtanks des Fahrzeugs bei dem Tankvorgang an der Wasserstofftankstelle,
(b) Messen der während des Tankvorgangs an den Fahrzeugtank abgegebenen Gasmenge des Wasserstoffs mittels eines Gaszählers der Wasserstofftankstelle,
(c) Aufbauen einer Kommunikationsverbindung zwischen der Wasserstofftankstelle und dem Fahrzeug oder einem mit dem Fahrzeug verbundenen externen Gerät,
(d) Übertragen zumindest einer Zählerinformation des Gaszählers, die die von dem Gaszähler gemessene Gasmenge des Wasserstoffs enthält, mittels der Kommunikationsverbindung an das Fahrzeug oder das externe Gerät, und
(e) Ermitteln der im Rahmen des Tankvorgangs in dem Fahrzeugtank aufgenommenen Gasmenge des Wasserstoffs.

Damit stellt das erfindungsgemäße Verfahren sowohl die durch die Wasserstofftankstelle vermeintlich abgegebene bzw. durch den Gaszähler gemessene Gasmenge des Wasserstoffs als auch die tatsächlich in dem Fahrzeugtank angekommene bzw. aufgenommene Gasmenge des Wasserstoffs bereit. Der Fahrer des Fahrzeugs bzw. der Kunde der Wasserstofftankstelle oder das Fahrzeug oder externe Gerät kann dadurch abgleichen bzw. ermitteln, ob die vom Gaszähler der Wasserstofftankstelle gemessene Gasmenge des Wasserstoffs der aufgenommenen Gasmenge des Wasserstoffs entspricht.

Darüber hinaus kann der Fahrer feststellen, ob er die tatsächlich zu bezahlende oder bezahlte Gasmenge des Wasserstoffs auch erhalten hat. Ferner kann bei Rückkopplung der aufgenommenen Gasmenge des Wasserstoffs oder einer entsprechenden Meldung seitens des Fahrers bzw. des Kunden oder des Fahrzeugs oder des externen Geräts an die Wasserstofftankstelle bzw. dessen Betreiber auch der Betreiber der Wasserstofftankstelle eine Überprüfung dahingehend erhalten, ob der Gaszähler ordnungsgemäß arbeitet oder anderweitige Probleme, wie etwa Leckagen in der Wasserstofftankstelle oder beim Tanken bestehen oder bestanden, die für eine Abweichung gesorgt haben oder sorgen.

Das Aufbauen der Kommunikationsverbindung kann dabei vor dem Befüllen des Fahrzeugtanks, während des Befüllens des Fahrzeugtanks oder nach Abschluss des Befüllens des Fahrzeugtanks bzw. des Tankvorgangs erfolgen. Das Messen der abgegebenen Gasmenge des Wasserstoffs erfolgt während des Befüllens. Das Übertragen der Zählerinformation kann nach Abschluss des Befüllens des Fahrzeugtanks, aber auch zu Zwischenzeitpunkten während des Tankvorgangs erfolgen. Auch das Ermitteln der in dem Fahrzeugtank aufgenommenen Gasmenge des Wasserstoffs kann nach Abschluss des Befüllens des Fahrzeugtanks, aber auch zu Zwischenzeitpunkten während des Tankvorgangs erfolgen.

Bei dem Tankvorgang kann es sich dabei insbesondere um einen durch einen Nutzer, etwa den Fahrer des Fahrzeugs, initiierten Tankvorgang einer Wasserstofftankstelle handeln.

Das Fahrzeug kann als ein Kraftfahrzeug und/oder Personenkraftfahrzeug und/oder Lastkraftfahrzeug und/oder Brennstoffzellenfahrzeug ausgeführt sein, welches zumindest einen Fahrzeugtank für Wasserstoff aufweist. Dieser Fahrzeugtank kann durch den Tankvorgang entsprechend der abgegebenen Gasmenge befüllt werden. Die Wasserstofftankstelle, also eine Tankstelle zum Betanken derartiger Fahrzeuge mit Wasserstoff, kann eine oder mehrere Zapfsäulen aufweisen. Mittels der Zapfsäule kann der Energievorrat solcher Fahrzeuge, also mobiler Wasserstoffverbraucher, insbesondere Brennstoffzellenfahrzeuge, aufgefüllt werden. Für die Wasserstofftankstelle kann der flüssige oder komprimiert gasförmige Wasserstoff in Tanks bereitgehalten werden. Eine Wasserstofftankstelle kann beispielsweise Pumpen und Zapfvorrichtungen zum Anschluss an die jeweiligen Fahrzeugtanks der Fahrzeuge aufweisen.

Es kann vorgesehen sein, dass der Gaszähler die Zählerinformation dadurch bereitstellt, dass der Gaszähler den beim Tankvorgang durchgesetzten Gasstrom misst. Da bei der Wasserstofftankstelle die Ermittlung des beim Tankvorgang durchgesetzten Gasstromes dem Mess- und Eichgesetz unterliegen kann, können erhöhte technische Anforderungen an diese Messung gestellt sein. In anderen Worten kann zur Gewährleistung der zuverlässigen Ermittlung der Gasmenge und damit der abgegebenen Energiemenge die Wasserstofftankstelle einer Eichung unterzogen sein.

Die Zählerinformation kann dabei unmittelbar den Zählerstand der während des Tankvorgangs gemessenen Gasmenge des Wasserstoffs darstellen. Dann kann der Gaszähler nach jedem Tankvorgang auf Null gesetzt werden.

Die Zählerinformation kann aber auch einen Anfangszählerstand vor Beginn des Tankvorgangs und einen aktuellen Zählerstand bzw. einen Zwischen- oder Endzählerstand nach Beendigung des Tankvorgangs enthalten. In diesem Falle kann die Zählerinformation derart die gemessene Gasmenge des Wasserstoffs enthalten, als dass sie sich durch Subtraktion berechnen lässt. Entweder kann die Wasserstofftankstelle, insbesondere ein Steuergerät der Wasserstofftankstelle, oder aber das Fahrzeug, insbesondere ein Steuergerät des Fahrzeugs, oder das Gerät entsprechend dazu eingerichtet sein, die Subtraktion vorzunehmen, um die gemessene Gasmenge des Wasserstoffs anhand der Zählerstände des Gaszählers zu ermitteln. In dem ersten Fall enthält die Zählerinformation also unmittelbar die gemessene Gasmenge des Wasserstoffs und in dem zweiten Fall enthält die Zählerinformation den Anfangszählerstand und einen aktuellen Zählerstand bzw. einen Zwischen- oder Endzählerstand, aus denen das Fahrzeug oder das externe Gerät die gemessene Gasmenge des Wasserstoffs berechnen kann.

Die ermittelte aufgenommene Gasmenge des Wasserstoffs repräsentiert die tatsächlich in dem Fahrzeugtank angekommene bzw. aufgenommene Gasmenge des Wasserstoffs.

Entsprechend erfolgt vorteilhafterweise das Ermitteln der im Rahmen des Tankvorgangs in dem Fahrzeugtank aufgenommenen Gasmenge des Wasserstoffs durch das Fahrzeug bzw. fahrzeugseitig.

So können fahrzeugexterne Einflüsse auf die Ermittlung der aufgenommenen Gasmenge vermieden werden. Hierbei kann vorgesehen sein, dass eine vor dem Tankvorgang vorhandene Gasmenge in dem Fahrzeugtank bekannt ist oder ermittelt wird. Die aufgenommene Gasmenge des Wasserstoffs kann dann über eine Subtraktion der aktuell, zwischen oder nach dem Tankvorgang insgesamt in dem Fahrzeugtank vorhandenen Gasmenge des Wasserstoffs von der vor dem Tankvorgang vorhandenen Gasmenge des Wasserstoffs ermittelt werden.

Dazu kann fahrzeugseitig auf eine Messung des Drucks und der Temperatur in dem Fahrzeugtank abgestellt werden, um die Gasmenge des Wasserstoffs in dem Fahrzeugtank zu bestimmen. Diese werden schon aus sicherheitstechnischen Gründen in derartigen Fahrzeugen zumeist aktuell gemessen und überwacht. So kann die thermische Zustandsgleichung idealer Gase verwendet werden, um die Gasmenge des Wasserstoffs in dem Fahrzeugtank zu ermitteln. Das Volumen des Fahrzeugtanks ist dabei schließlich bekannt sowie konstant. Wenn Druck und Temperatur in dem Fahrzeugtank nicht bekannt sind, kann alternativ auf Messwerte der Wasserstofftankstelle zurückgegriffen werden, die diese mittels der Kommunikationsverbindung an das Fahrzeug oder das externe Gerät übertragen kann.

Es ist erfindungsgemäß vorgesehen, dass das Verfahren ferner den Schritt aufweist: Ermitteln einer Differenzgasmenge zwischen der abgegebenen Gasmenge des Wasserstoffs und der aufgenommenen Gasmenge des Wasserstoffs.

Mittels der Differenzgasmenge kann so das Ausmaß einer Abweichung der abgegebenen Gasmenge des Wasserstoffs von der aufgenommen Gasmenge des Wasserstoffs bestimmt bzw. überprüft werden.

Es kann dabei vorgesehen sein, dass das Ermitteln der Differenzgasmenge von einem Steuergerät des Fahrzeugs oder dem externen Gerät durchgeführt wird.

Demgemäß erfolgt das Ermitteln der Differenzgasmenge automatisiert. Das Ergebnis, also die Differenzgasmenge, kann dem Fahrer bzw. Nutzer des Kraftfahrzeugs beispielsweise auf einer Anzeige an der Wasserstofftankstelle, auf einer Anzeige in dem Fahrzeug oder auf einer Anzeige des externen Geräts angezeigt werden. So kann der Fahrer bzw. Kunde den Tankvorgang nachvollziehen. Alternativ oder zusätzlich ist es denkbar, dass dem Fahrer auch die abgegebene Gasmenge des Wasserstoffs und die aufgenommene Gasmenge des Wasserstoffs angezeigt werden.

Auch ist erfindungsgemäß vorgesehen, dass das Übertragen einer Meldung auf Basis der ermittelten Differenzgasmenge an die Wasserstofftankstelle mittels der Kommunikationsverbindung erfolgt.

Diese Meldung kann von dem Steuergerät des Fahrzeugs oder dem externen Gerät übertragen werden. Die Meldung kann dabei eine Zählerinformation enthalten. Die Zählerinformation kann die Differenzgasmenge und/oder die aufgenommene Gasmenge des Wasserstoffs enthalten. So kann auch die Wasserstofftankstelle und ihr Betreiber mit einfachen Mitteln über eine mögliche Differenzgasmenge in Kenntnis gesetzt werden. Ferner kann die Wasserstofftankstelle so die eventuelle Differenzgasmenge anzeigen. Der Betreiber kann dann die Wasserstofftankstelle auf Fehler oder Probleme prüfen, beispielsweise eine vorzeitige erneute Eichung des Gaszählers durchführen lassen oder eine verpasste Eichung nachholen lassen.

Hierbei kann vorgesehen sein, dass als Meldung eine Erfolgsmeldung an die Wasserstofftankstelle übertragen wird, die der Wasserstankstelle einen fehlerfreien Tankvorgang anzeigt, wenn die ermittelte Differenzgasmenge Null ist oder einen vorbestimmten Grenzwert nicht überschreitet, und/oder als Meldung eine Fehlermeldung an die Wasserstofftankstelle übertragen wird, die der Wasserstofftankstelle einen fehlerhaften Tankvorgang anzeigt, wenn die ermittelte Differenzgasmenge den vorbestimmten Grenzwert überschreitet.

Alternativ zu der Übertragung einer Meldung kann auch vorgesehen sein, dass weder eine Erfolgsmeldung noch eine Fehlermeldung übertragen wird. In diesem Fall kann eine Steuereinheit der Wasserstofftankstelle aufgrund der ausgelassenen Meldung bestimmen, dass der Tankvorgang fehlerhaft gewesen sein muss. Dies hat jedoch den Nachteil, dass seitens der Steuereinheit ein Timer für den Empfang einer Meldung gestartet werden muss. So kann die Wasserstofftankstelle sehr gezielt von dem Fahrzeug oder dem externen Gerät über einen Tankerfolg des Tankvorgangs in Kenntnis gesetzt werden. Im Falle einer Erfolgsmeldung kann beispielsweise eine Rechnung bzw. Zahlungsaufforderung für den Fahrer bzw. Nutzer des Fahrzeugs erstellt werden sowie der Fahrer bzw. Nutzer an der Wasserstofftankstelle selbst über den erfolgreichen Tankvorgang informiert werden. Wenn jedoch eine Fehlermeldung übertragen wird oder eine Erfolgsmeldung in der Zeit des laufenden Timers ausbleibt, dann kann die Rechnungserstellung oder Zahlungsaufforderung unterbrochen oder verschoben werden und vorerst eine Lösung für den fehlerhaften Tankvorgang gesucht werden.

Der vorbestimmte Grenzwert kann dabei auch als ein Toleranzwert bezeichnet werden. Dieser ergibt sich aus der üblicherweise höheren Messgenauigkeit des Gaszählers, insbesondere wenn er geeicht ist, der direkt den Gasstrom ermittelt gegenüber dem im Fahrzeug angewandtem Verfahren zur Bestimmung der Gasmenge in dem Fahrzeugtank sowie möglicher Diffusion des Wasserstoffs. Würde kein Grenzwert vorbestimmt werden, würden auch schon geringe, auf derartige Toleranzabweichungen bei dem Messverfahren im Fahrzeugtank zurückzuführende Differenzgasmengen berücksichtigt werden, die sich aber nicht auf einen fehlerhaften Gaszähler oder eine insgesamt fehlerhafte Wasserstofftankstelle zurückführen lassen.

Es kann vorgesehen sein, dass die Meldung durch ein Sicherheitsmerkmal des Fahrzeugs oder des externen Geräts signiert wird.

Beispielsweise kann es sich hierbei um eine digitale Signatur handeln. Dabei enthält die Meldung einen geheimen Signaturschlüssel. Die Wasserstofftankstelle kann die Urheberschaft und Integrität der Nachricht mittels eines öffentlichen Verifikationsschlüssels für den geheimen Signaturschlüssel prüfen. Es kann sich ferner beispielsweise um eine CRC-, RSA- oder ECDSA-Signatur handeln. Dadurch können Manipulationen zuverlässig vermieden werden.

Ferner kann vorgesehen sein, dass das Verfahren ferner einen elektronischen Bezahlvorgang für den Tankvorgang an der Wasserstofftankstelle umfasst, worin eine Bezahlung im Rahmen des Bezahlvorgangs auf Basis der in dem Fahrzeugtank aufgenommenen Gasmenge des Wasserstoffs oder auf Basis der in dem Fahrzeugtank aufgenommenen und um den vorbestimmten Grenzwert geminderten Gasmenge des Wasserstoffs erfolgt.

Dadurch wird erreicht, dass der Nutzer bzw. Kunde der Wasserstofftankstelle tatsächlich nur die Gasmenge des Wasserstoffs bezahlt, die die Wasserstofftankstelle abgegeben hat und nicht nur diejenige, die der womöglich fehlerhafte Gaszähler gezählt hat. Die Einbeziehung des vorbestimmten Grenzwerts hat den Vorteil, dass prinzipiell der genauere Gaszähler zur Heranziehung der für die Bezahlung maßgeblichen Gasmenge des Gaszählers herangezogen wird, es sei denn, dass eine erhebliche, d. h. über den vorbestimmten Grenzwert hinausgehende, Abweichung vorliegt. In diesem Fall wird ausgeschlossen, dass der Kunde einen falschen Preis bezahlt.

Auch kann vorgesehen sein, dass die Zählerinformation durch ein Sicherheitsmerkmal der Wasserstofftankstelle, insbesondere des Gaszählers, signiert wird.

Beispielsweise kann es sich hierbei um eine digitale Signatur handeln. Dabei enthält die Meldung einen geheimen Signaturschlüssel. Das Fahrzeug oder das externe Gerät kann die Urheberschaft und Integrität der Nachricht mittels eines öffentlichen Verifikationsschlüssels für den geheimen Signaturschlüssel prüfen. Es kann sich ferner beispielsweise um eine CRC-, RSA- oder ECDSA-Signatur handeln. Dadurch können Manipulationen zuverlässig vermieden werden.

Ferner kann vorgesehen sein, dass als externes Gerät ein Smartphone oder ein Tabletcomputer genutzt wird.

Dementsprechend kann der Fahrer bzw. Nutzer des Fahrzeugs mittels seines persönlichen Smartphones oder Tabletcomputers eine Überprüfung des Tankvorgangs vornehmen lassen. Dies hat den Vorteil, dass nicht jedes Fahrzeug über die Funktionalität etwa zum Aufbauen der Kommunikationsverbindung mit der Wasserstofftankstelle verfügen muss. Es kann kostengünstiger sein, das persönliche Smartphone oder den Tabletcomputer des Fahrers bzw. Nutzers zu nutzen, der bereits etwa über eine drahtlose Schnittstelle verfügt. Dazu ist jedoch erforderlich, dass das Smartphone oder der Tabletcomputer von dem Fahrzeug, insbesondere seinem Steuergerät, eine Information über die aufgenommene Gasmenge des Wasserstoffs erhält.

Ferner kann vorgesehen sein, dass der Überprüfungsvorgang hinsichtlich des Tankvorgangs mit dem Bezahlvorgang gekoppelt wird. So ist es bekannt, beispielsweise mittels Nahfeldkommunikation einen Bezahlvorgang vorzunehmen. So kann mittels derselben Nahfeldkommunikation als Kommunikationsverbindung für den Bezahlvorgang beispielsweise auch die Überprüfung der abgegebenen Gasmenge des Wasserstoffs erfolgen.

Alternativ können andere übliche Funktechnologien, wie LTE, 5G, WLAN, Bluetooth^{®} oder dergleichen des Smartphones oder des Tabletcomputers für den Kommunikationsaufbau genutzt werden. Dabei kann eine entsprechende App für das Smartphone oder den Tabletcomputer eingerichtet sein, die den Tankvorgang überprüft. Entsprechend kann das externe Gerät die Kommunikationsverbindung zur Wasserstofftankstelle aufbauen, die Zählerinformationen von der Wasserstofftankstelle empfangen und von dem Fahrzeug die aufgenommene Gasmenge des Wasserstoffs als Information beziehen und ggf. weiter abgleichen, die Differenzgasmenge ermitteln und/oder ggf. eine der bereits beschriebenen Meldungen an die Wasserstofftankstelle übertragen.

Auch kann vorgesehen sein, dass die Wasserstofftankstelle eine mit dem Gaszähler verbundene Steuereinheit aufweist, wobei die Steuereinheit zum Übertragen der zumindest einen Zählerinformation eingerichtet ist.

Bei dieser Steuereinheit kann es sich um die zuvor erwähnte Steuereinheit der Wasserstofftankstelle handeln, die zur Verarbeitung der Meldung eingerichtet ist. Die Steuereinheit kann hierzu mit einem zweiten drahtlosen Kommunikationsgerät verbunden sein oder ein zweites drahtloses Kommunikationsgerät aufweisen, das die eigentliche Übertragung der zumindest einen Zählerinformation vornimmt. Die Steuereinheit kann aber die Übertragung initialisieren und die entsprechende Zählerinformation von dem Gaszähler an das zweite drahtlose Kommunikationsgerät übermitteln.

Hierbei kann vorgesehen sein, dass der Gaszähler und die Steuereinheit in einer gemeinsamen Messkapsel angeordnet sind.

Dadurch können Manipulationen der Steuereinheit vermieden werden. Ferner kann der Gaszähler plombiert sein, um Softwaremanipulationen zu verhindern.

Auch kann vorgesehen sein, dass das Fahrzeug oder das externe Gerät ein erstes drahtloses Kommunikationsgerät und die Wasserstofftankstelle ein zweites drahtloses Kommunikationsgerät zum Aufbauen einer drahtlosen Kommunikationsverbindung aufweist.

Entsprechend kann die Kommunikationsverbindung vorteilhafterweise drahtlos erfolgen. Gegenüber einer drahtgebundenen Kommunikation mit einer elektrischen Datenleitung wird so eine potenzielle Explosionsgefahr der Wasserstofftankstelle vermieden. Die drahtlose Kommunikationsverbindung kann dabei beispielsweise mittels WLANs, Bluetooth^{®}, LTE, 5G, gemäß einem Car-2-Car-Kommunikationsstandard oder auf andere ähnliche Weise implementiert werden.

Schließlich kann auch vorgesehen sein, dass das Verfahren während des laufenden Tankvorgangs für eine Teilmenge der insgesamt bei dem Tankvorgang gemessenen Gasmenge des Wasserstoffs durchgeführt wird.

Mit anderen Worten kann nach einer vorbestimmten Tankzeit des Tankvorgangs, die einem Teil der gesamten Tankzeit für den vollständigen Tankvorgang entspricht, überprüft werden, ob die gemessene Gasmenge des Wasserstoffs nach der vorbestimmten Tankzeit der in dem Fahrzeugtank aufgenommenen Gasmenge des Wasserstoffs entspricht. Dadurch kann bereits vor Beendigung des Tankvorgangs ggf. festgestellt werden, ob der Tankvorgang fehlerfrei oder fehlerhaft verläuft. Insbesondere kann so eine kontinuierliche oder diskrete, d. h. zu diskreten Zeitpunkten, erfolgende Überprüfung des Tankvorgangs erfolgen.

Gemäß einem zweiten Aspekt der Erfindung wird die eingangs erwähnte Aufgabe gelöst durch ein System aus einem Fahrzeug mit einem Fahrzeugtank zur Aufnahme von Wasserstoff, ggf. einem externen Gerät und einer Wasserstofftankstelle zur Abgabe einer Gasmenge eines Wasserstoffs an den Fahrzeugtank des Fahrzeugs bei einem Tankvorgang und mit einem Gaszähler, wobei das System zur Durchführung des Verfahrens nach dem ersten Aspekt der Erfindung eingerichtet ist.

Damit weist das System gemäß dem zweiten Aspekt der Erfindung dieselben Vorteile auf, wie sie in Bezug auf das Verfahren gemäß dem ersten Aspekt der Erfindung beschrieben worden sind. Ferner kann das System die vorstehend beschriebenen Merkmale des Verfahrens aufweisen, sodass auf Wiederholungen dieser Merkmale diesbezüglich verzichtet wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein, sofern diese Änderungen nicht über den Umfang der Ansprüche hinausgehen. Es zeigen jeweils schematisch:
- Fig. 1: eine Darstellung eines Tankvorgangs mit einem Nutzer an einem System gemäß einem Ausführungsbeispiel der Erfindung mit einer Wasserstofftankstelle, einem externen Gerät und einem Fahrzeug;
- Fig. 2: eine schematische Darstellung des Systems aus Fig. 1 mit Wasserstofftankstelle und Fahrzeug;
- Fig. 3: eine schematische Darstellung des Systems aus Fig. 1 mit Wasserstofftankstelle, externem Gerät und Fahrzeug;
- Fig. 4: eine schematische Darstellung eines Tankvorgangs mit einem Verfahren zu seiner Überprüfung gemäß einem Ausführungsbeispiel der Erfindung in dem System aus Fig. 1; und

Fig. 5 einen beispielhaften zeitlichen Verlauf eines Drucks während des Tankvorgangs.

In den nachfolgenden Figuren werden für die gleichen technischen Merkmale auch von unterschiedlichen Ausführungsbeispielen die identischen Bezugszeichen verwendet.

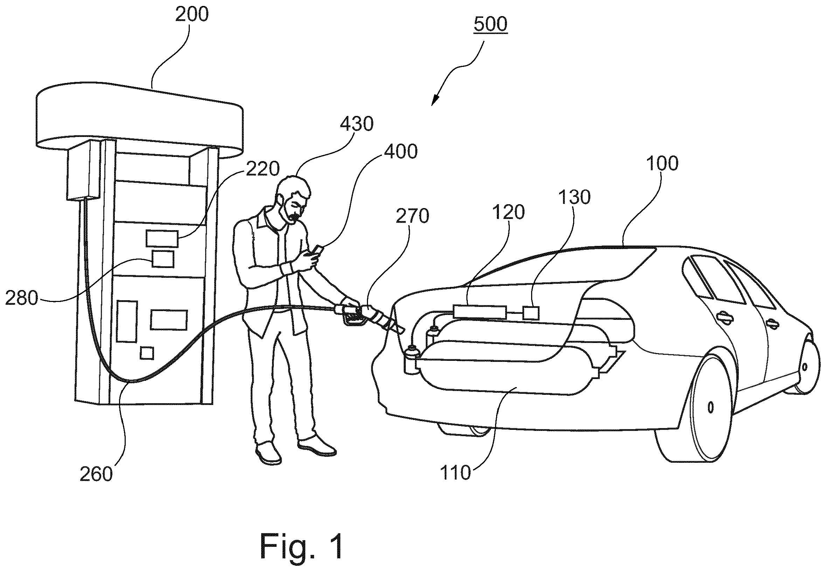

Figur 1 zeigt ein System umfassend ein Fahrzeug 100, eine Wasserstofftankstelle 200 und ein externes Gerät 400 bei einem durch einen Nutzer bzw. Fahrer 430 des Fahrzeugs 100 initiierten Tankvorgang 500.

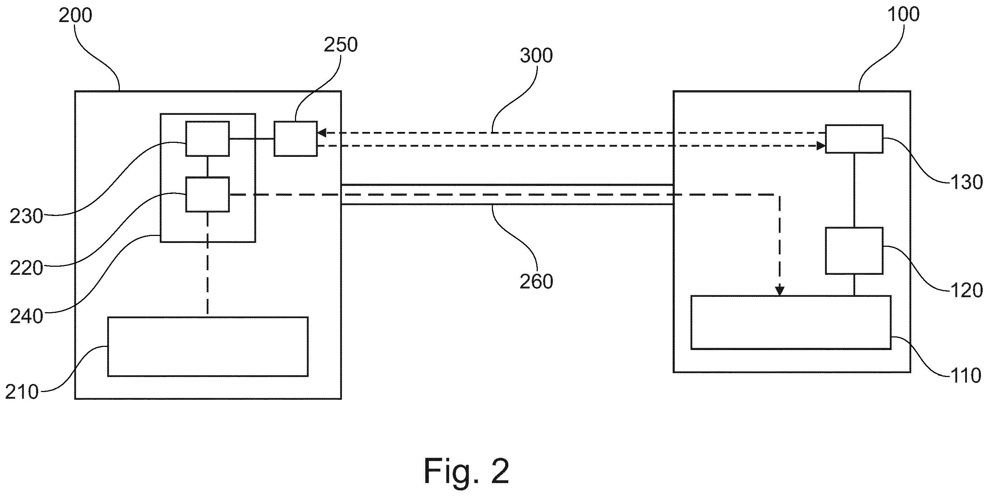

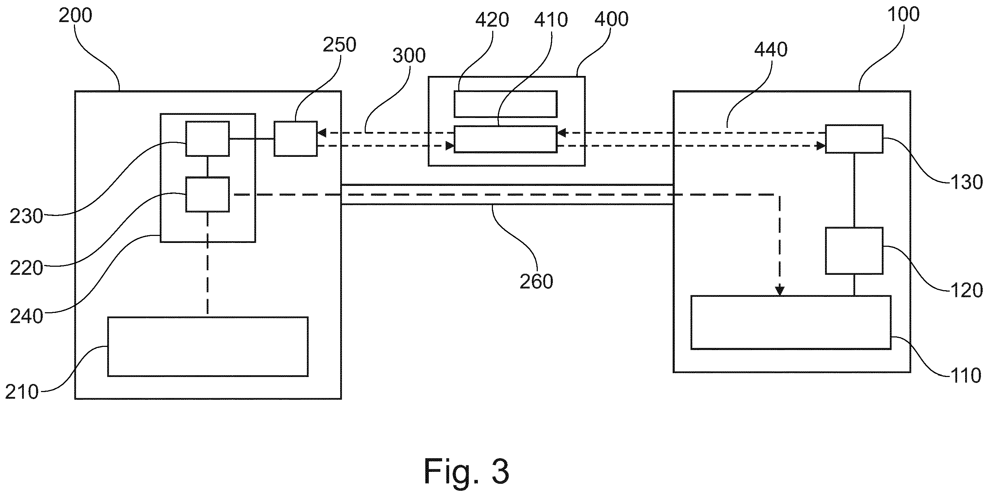

Das System kann dabei sowohl das Fahrzeug 100, die Wasserstofftankstelle 200 als auch das externe Gerät 400 aufweisen bzw. für das im Folgenden beschriebene Verfahren nutzen, wie in Figur 3 gezeigt ist, alternativ aber auch nur das Fahrzeug 100 und die Wasserstofftankstelle 200 aufweisen bzw. für das im Folgenden beschriebene Verfahren nutzen, wie in Figur 2 gezeigt ist.

Während die Figur 1 den Tankvorgang 500 bildlich veranschaulicht, zeigen die Figuren 2, 3, 4 und 5 den Tankvorgang 500 sowie ein erfindungsgemäßes Ausführungsbeispiel eines Verfahrens zur Überprüfung des Tankvorgangs 500 rein schematisch.

Das Fahrzeug 100 ist vorliegend als ein Brennstoffzellenfahrzeug ausgebildet, das einen Fahrzeugtank 110 zur Aufnahme von Wasserstoff als Energieträger zum Betrieb des Fahrzeugs 100 aufweist. Vorliegend umfasst der Fahrzeugtank 110 zwei Gasflaschen, kann jedoch auch mit nur einer oder mehr Gasflaschen oder mit einem anderen oder mehreren anderen Tankbehältnissen ausgestaltet sein.

Der Fahrzeugtank 110 ist mit einem Steuergerät 120 in dem Fahrzeug 100 verbunden, das wiederum mit einem ersten drahtlosen Kommunikationsgerät 130 in dem Fahrzeug 100 verbunden ist. Das Steuergerät 120 und das erste drahtlose Kommunikationsgerät 130 sind nur beispielhaft hinsichtlich ihrer Anordnung in dem Fahrzeug 100 und ihrer schematischen Ausgestaltung gezeigt.

Die Wasserstofftankstelle 200 ist vorliegend nur mit einer einzigen Zapfsäule gezeigt, kann aber auch mehrere Zapfsäulen aufweisen. Der Fahrzeugtank 110 wird durch den Nutzer 430 vorliegend mit Wasserstoff aus der Zapfsäule der Wasserstofftankstelle 200 betankt. Dazu hat der Nutzer 430 die Zapfpistole 270 an dem Gasschlauch 260 der Wasserstofftankstelle 200 gasdicht mit einer Tanköffnung des Fahrzeugtanks 110 gekoppelt. Eine Zählerstandsanzeige 280 zeigt den Zählerstand des Gaszählers 220 oder die während des Tankvorgangs 500 gemessene Gasmenge des Wasserstoffs an.

Dadurch wird eine Gasmenge des Wasserstoffs aus der Wasserstofftankstelle 200 in dem Fahrzeugtank 110 bereitgestellt. Ein Gaszähler 220 in der Wasserstofftankstelle 200 zählt bzw. misst die von der Wasserstofftankstelle 200 abgegebene Gasmenge des Wasserstoffs, die im Folgenden als gemessene Gasmenge des Wasserstoffs bezeichnet wird.

Der Nutzer 430 hält ein optionales externes Gerät 400 in den Händen. Dabei handelt es sich um ein Smartphone oder einen Tabletcomputer des Nutzers 430. Der Nutzer 430 möchte sicherstellen, dass er nur für die Gasmenge an Wasserstoff bezahlt, die tatsächlich in seinem Fahrzeugtank 100 aufgenommen wird bzw. ankommt.

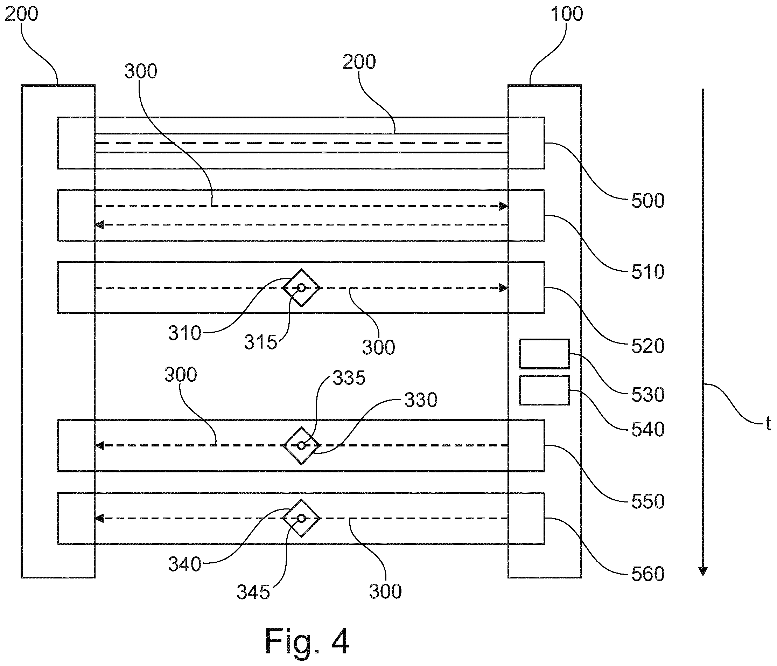

Anhand von Figur 2 und 4 wird im Folgenden erklärt, wie dies fahrzeugseitig allein mit dem Fahrzeug 100 in Zusammenspiel mit der Wasserstofftankstelle 200 sichergestellt wird.

Neben dem Gaszähler 220 weist die Wasserstofftankstelle 200 einen Wasserstofftank 210 auf, aus dem der Wasserstoff vorbei an dem seine Gasmenge messenden Gaszähler 220 mittels des Gasschlauchs 260 zu dem Fahrzeugtank 110 transportiert wird. Der Gaszähler 220 ist geeicht und umfasst eine Steuereinheit 230. Der Gaszähler 220 und die Steuereinheit 230 sind in einer gemeinsamen Messkapsel 240 angeordnet. Die Steuereinheit 230 ist ferner mit einer zweiten drahtlosen Kommunikationseinheit 250 in oder an der Wasserstofftankstelle 200 verbunden.

Via der zweiten drahtlosen Kommunikationseinheit 250 der Wasserstofftankstelle 200 und der ersten drahtlosen Kommunikationseinheit 130 des Fahrzeugs 100 wird vor, während oder nach Abschluss des Tankvorgangs 500 eine Kommunikationsverbindung 300 zwischen der Wasserstofftankstelle 200 und dem Fahrzeug 100 aufgebaut. Mittels dieser Kommunikationsverbindung 300 können das Fahrzeug 100 und die Wasserstofftankstelle 200 Informationen miteinander austauschen.

Alternativ zu der Kommunikationsverbindung 300 zwischen dem Fahrzeug 100 und der Wasserstofftankstelle 200 kann die Kommunikationsverbindung 300 bei einem System mit externem Gerät 400 auch zwischen dem externen Gerät 400 und der Wasserstofftankstelle 200 aufgebaut werden, wie Figur 3 zeigt. Dazu ist es notwendig, dass das externe Gerät 400 drahtlos mit dem Fahrzeug 100 kommuniziert, um Informationen von dem Fahrzeug 100, insbesondere dem Steuergerät 120, zu beziehen.

Das externe Gerät 400 weist hierzu selbst ein erstes drahtloses Kommunikationsgerät 410 zur direkten Kommunikation mit dem zweiten drahtlosen Kommunikationsgerät 250 der Wasserstofftankstelle 200 auf und kommuniziert drahtlos mit dem Fahrzeug 100, oder wie gezeigt drahtlos mit dem ersten drahtlosen Kommunikationsgerät 130 des Fahrzeugs 100 mittels einer weiteren Kommunikationsverbindung 440. Das externe Gerät 400 weist statt des Steuergeräts 120 eine Recheneinheit 420 auf, die Berechnungen vornehmen kann.

Figur 4 zeigt schematisch den Ablauf beim und nach dem Tankvorgang 500 gemäß dem Verfahren eines Ausführungsbeispiels der Erfindung für das System gemäß Figur 2. Für das System gemäß Figur 3 gilt entsprechend die oben beschriebene Abwandlung in dem Verfahren.

Das Fahrzeug 100 rechts und die Wasserstofftankstelle 200 links sind in der Figur 4 lediglich schematisch gezeigt. Der Verfahrensablauf ist beispielhaft durch eine Zeitachse mit ablaufender Zeit t, rechts in Figur 4, symbolisiert.

Zunächst wird der Tankvorgang 500 seitens des Nutzers 430 an der Wasserstofftankstelle 200 initialisiert. Dadurch wird Wasserstoff mittels des Gasschlauchs 260 in dem Fahrzeugtank 110 bereitgestellt. Der Gaszähler 220 misst die dabei abgegebene Gasmenge des Wasserstoffs.

Anschließend wird in einem Kommunikationsaufbauschritt 510 die Kommunikationsverbindung 300 zwischen dem Fahrzeug 100 und der Wasserstofftankstelle 200 aufgebaut. Alternativ kann die Kommunikationsverbindung 300 auch vor dem Tankvorgang 500 oder während des Tankvorgangs 500 aufgebaut werden.

Anschließend, das heißt nach Abschluss des Tankvorgangs 500 oder zu einem Zwischenzeitpunkt in dem Tankvorgang 500, wird in einem Zählerinformationsübertragungsschritt 520 eine Zählerinformation 310 von dem Gaszähler 220 mittels der Steuereinheit 230 über die Kommunikationsverbindung 300 an das Fahrzeug 100 übertragen. Die Zählerinformation 310 enthält als Information die von dem Gaszähler 220 gemessene Gasmenge des Wasserstoffs bzw. ihren Wert. Die Zählerinformation 310 weist zudem ein Sicherheitsmerkmal 315, vorliegend in Form einer digitalen Signatur, auf, die von dem Fahrzeug 100 bzw. dem Steuergerät 120 entschlüsselt werden muss, bevor der Zählerinformation 310 vertraut wird.

Neben der Zählerinformation 310 wird an dem Fahrzeug 100 bzw. dem Steuergerät 120 fahrzeugseitig die in dem Fahrzeugtank 110 aufgenommene Gasmenge des Wasserstoffs in einem entsprechenden Ermittlungsschritt 530 ermittelt und dem Steuergerät 120 zur Verfügung gestellt.

In dem darauffolgenden Abgleichschritt 540 gleicht das Steuergerät 120 die Zählerinformation 310 bzw. die gemessene Gasmenge des Wasserstoffs mit der aufgenommenen Gasmenge des Wasserstoffs ab. Dabei wird eine mögliche Differenzgasmenge zwischen der gemessenen Gasmenge des Wasserstoffs und der aufgenommenen Gasmenge des Wasserstoffs ermittelt.

Wenn die ermittelte Differenzgasmenge Null ist oder einen vorbestimmten Grenzwert nicht überschreitet, wird mittels der Kommunikationsverbindung 300 eine mit einem Sicherheitsmerkmal 335 versehene Erfolgsmeldung 330 an die Wasserstofftankstelle 200 übertragen, die der Wasserstankstelle 200 einen fehlerfreien Tankvorgang 500 anzeigt. Dieser Vorgang entspricht dem Erfolgsmeldungsschritt 550.

Wird hingegen, wie lediglich zur Veranschaulichung darunter gezeigt ist, bestimmt, dass die ermittelte Differenzgasmenge den vorbestimmten Grenzwert überschreitet, wird mittels der Kommunikationsverbindung 300 eine mit einem Sicherheitsmerkmal 345 versehene Fehlermeldung 340 an die Wasserstofftankstelle 200 übertragen, die der Wasserstankstelle 200 einen fehlerhaften Tankvorgang 500 anzeigt. Dieser Vorgang entspricht dem Fehlermeldungsschritt 560.

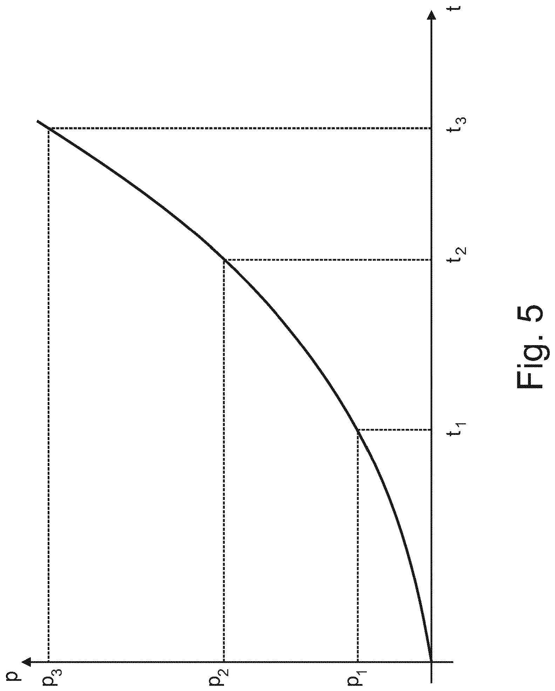

Figur 5 zeigt einen beispielhaften zeitlichen Verlauf eines Drucks p in dem Fahrzeugtank 110 während des Tankvorgangs 500. Zu verschiedenen Zeitpunkten t₁, t₂, t₃, wobei t₃ ein Endzeitpunkt des Tankvorgangs 500 ist und t₁ und t₂ Zwischenzeitpunkte sind, wird die Differenzgasmenge, unter Ermittlung der in dem Fahrzeugtank 110 aufgenommenen Gasmenge des Wasserstoffs zu den Zeitpunkten t₁, t₂, t₃ unter Zugrundelegung des dabei herrschenden Drucks p₁, p₂, p₃ mittels der thermischen Zustandsgleichung für ideale Gase, geprüft, ob die jeweilige Differenzgasmenge den vorbestimmten Grenzwert überschreitet. Dadurch kann ein fehlerhafter Tankvorgang 500 bereits vor seiner Beendigung erkannt werden.

Die voranstehende Erläuterung der Ausführungsformen beschreibt die vorliegende Erfindung ausschließlich im Rahmen von Ausführungsbeispielen. Selbstverständlich können einzelne Merkmale der Ausführungsformen, sofern technisch sinnvoll, frei miteinander kombiniert werden, ohne den Umfang der Ansprüche zu verlassen.

### Bezugszeichenliste

- 100: Fahrzeug
- 110: Fahrzeugtank
- 120: Steuergerät
- 130: erstes drahtloses Kommunikationsgerät
- 200: Wasserstofftankstelle
- 210: Wasserstofftank
- 220: Gaszähler
- 230: Steuereinheit
- 240: Messkapsel
- 250: zweites drahtloses Kommunikationsgerät
- 260: Gasschlauch
- 270: Zapfpistole
- 280: Zählerstandsanzeige
- 300: Kommunikationsverbindung
- 310: Zählerinformation
- 330: Meldung, Erfolgsmeldung
- 335: Sicherheitsmerkmal
- 340: Meldung, Fehlermeldung
- 345: Sicherheitsmerkmal
- 400: externes Gerät
- 410: erstes drahtloses Kommunikationsgerät
- 420: Recheneinheit
- 430: Nutzer, Fahrer
- 440: weitere Kommunikationsverbindung
- 500: Tankvorgang
- 510: Kommunikationsaufbauschritt
- 520: Zählerinformationsübertragungsschritt
- 530: Ermittlungsschritt
- 540: Abgleichschritt
- 550: Erfolgsmeldungsschritt
- 560: Fehlermeldungsschritt
- t: Zeit
- p: Druck

## Patentansprüche

1. Verfahren zur Überprüfung einer bei einem Tankvorgang (500) eines Fahrzeugs (100) an einer Wasserstofftankstelle (200) an das Fahrzeug (100) abgegebenen Gasmenge eines Wasserstoffs, wobei das Verfahren die Schritte aufweist:
(a) Befüllen eines Fahrzeugtanks (110) des Fahrzeugs (100) bei dem Tankvorgang an der Wasserstofftankstelle (200),
(b) Messen der während des Tankvorgangs (500) an den Fahrzeugtank (110) abgegebenen Gasmenge des Wasserstoffs mittels eines Gaszählers (220) der Wasserstofftankstelle (200),
(c) Aufbauen einer Kommunikationsverbindung (300) zwischen der Wasserstofftankstelle (200) und dem Fahrzeug (100) oder einem mit dem Fahrzeug (100) verbundenen externen Gerät (400),
(d) Übertragen zumindest einer Zählerinformation (310) des Gaszählers (220), die die vom Gaszähler (220) gemessene Gasmenge des Wasserstoffs enthält, mittels der Kommunikationsverbindung (300) an das Fahrzeug (100) oder das externe Gerät (400), und
(e) Ermitteln der im Rahmen des Tankvorgangs (500) in dem Fahrzeugtank (110) aufgenommenen Gasmenge des Wasserstoffs,
- Ermitteln einer Differenzgasmenge zwischen der gemessenen Gasmenge des Wasserstoffs und der aufgenommenen Gasmenge des Wasserstoffs, **dadurch gekennzeichnet, dass** das Verfahren ferner den Schritt aufweist:
- Übertragen einer Meldung (330, 340) auf Basis der ermittelten Differenzgasmenge an die Wasserstofftankstelle (200) mittels der Kommunikationsverbindung (300).

2. Verfahren nach Anspruch 1, wobei das Ermitteln der im Rahmen des Tankvorgangs (500) in dem Fahrzeugtank (110) aufgenommenen Gasmenge des Wasserstoffs durch das Fahrzeug (100) erfolgt.

3. Verfahren nach einem der voranstehenden Ansprüche, wobei das Ermitteln der Differenzgasmenge von einem Steuergerät (120) des Fahrzeugs (100) oder dem externen Gerät (400) durchgeführt wird.

4. Verfahren nach Anspruch 3, wobei
(a) als Meldung (330, 340) eine Erfolgsmeldung (330) an die Wasserstofftankstelle (200) übertragen wird, die der Wasserstankstelle (200) einen fehlerfreien Tankvorgang (500) anzeigt, wenn die ermittelte Differenzgasmenge Null ist oder einen vorbestimmten Grenzwert nicht überschreitet, und/oder
(b) als Meldung (330, 340) eine Fehlermeldung (340) an die Wasserstofftankstelle (200) übertragen wird, die der Wasserstofftankstelle (200) einen fehlerhaften Tankvorgang (500) anzeigt, wenn die ermittelte Differenzgasmenge den vorbestimmten Grenzwert überschreitet.

5. Verfahren nach einem der voranstehenden Ansprüche, wobei die Meldung (330, 340) durch ein Sicherheitsmerkmal (335, 345) des Fahrzeugs (100) oder des externen Geräts (400) signiert wird.

6. Verfahren nach Anspruch 4 oder 5, wobei das Verfahren ferner einen elektronischen Bezahlvorgang für den Tankvorgang (500) an der Wasserstofftankstelle (200) umfasst, worin eine Bezahlung im Rahmen des Bezahlvorgangs auf Basis der in dem Fahrzeugtank (110) aufgenommenen Gasmenge des Wasserstoffs oder auf Basis der in dem Fahrzeugtank (110) aufgenommenen und um den vorbestimmten Grenzwert geminderten Gasmenge des Wasserstoffs erfolgt.

7. Verfahren nach einem der voranstehenden Ansprüche, wobei die Zählerinformation (310) durch ein Sicherheitsmerkmal (315) der Wasserstofftankstelle (200) signiert wird.

8. Verfahren nach einem der voranstehenden Ansprüche, wobei als externes Gerät (400) ein Smartphone oder ein Tabletcomputer genutzt wird.

9. Verfahren nach einem der voranstehenden Ansprüche, wobei die Wasserstofftankstelle (200) eine mit dem Gaszähler (220) verbundene Steuereinheit (230) aufweist, wobei die Steuereinheit (220) zum Übertragen der zumindest einen Zählerinformation (310) eingerichtet ist.

10. Verfahren nach Anspruch 9, wobei der Gaszähler (220) und die Steuereinheit (230) in einer gemeinsamen Messkapsel (240) angeordnet sind.

11. Verfahren nach einem der voranstehenden Ansprüche, wobei das Fahrzeug (100) oder das Gerät (400) ein erstes drahtloses Kommunikationsgerät (130, 410) und die Wasserstofftankstelle (200) ein zweites drahtloses Kommunikationsgerät (250) zum Aufbauen einer drahtlosen Kommunikationsverbindung (300) aufweist.

12. Verfahren nach einem der voranstehenden Ansprüche, wobei das Verfahren während des laufenden Tankvorgangs (500) für eine Teilmenge der insgesamt bei dem Tankvorgang (500) gemessenen Gasmenge des Wasserstoffs durchgeführt wird.

13. System aus einem Fahrzeug (100) mit einem Fahrzeugtank (110) zur Aufnahme von Wasserstoff und einer Wasserstofftankstelle (100) zur Abgabe einer Gasmenge eines Wasserstoffs an den Fahrzeugtank (110) des Fahrzeugs (100) bei einem Tankvorgang (500) und mit einem Gaszähler (220), wobei das System zur Durchführung des Verfahrens nach einem der vorangehenden Ansprüche eingerichtet ist.

## Claims

1. A method of checking an amount of a hydrogen gas delivered to a vehicle (100) at a hydrogen refueling station (200) during a refueling process (500) of the vehicle (100), the method comprising the steps of:
(a) Filling a vehicle tank (110) of the vehicle (100) during the refueling process at the hydrogen refueling station (200),
(b) Measuring the amount of hydrogen gas delivered to the vehicle tank (110) during the refueling process (500) by means of a gas meter (220) of the hydrogen refueling station (200),
(c) Establishing a communication link (300) between the hydrogen refueling station (200) and the vehicle (100) or an external device (400) connected to the vehicle (100),
(d) Transmitting at least one meter information (310) of the gas meter (220), which contains the amount of hydrogen gas measured by the gas meter (220), to the vehicle (100) or the external device (400) by means of the communication link (300), and
(e) Determining the amount of hydrogen gas absorbed in the vehicle tank (110) during the refueling process (500),
- Determining a differential gas quantity between the measured gas quantity of hydrogen and the absorbed gas quantity of hydrogen,
**characterized in that** the method further comprises the step:
- Transmission of a message (330, 340) based on the determined differential gas quantity to the hydrogen refueling station (200) by means of the communication link (300).

2. The method according to claim 1, wherein the determination of the amount of hydrogen gas absorbed in the vehicle tank (110) during the refueling process (500) is performed by the vehicle (100).

3. The method according to any one of the preceding claims, wherein the determination of the amount of differential gas is performed by a control unit (120) of the vehicle (100) or the external device (400).

4. The method according to claim 3, wherein
(a) a success message (330) is transmitted to the hydrogen refueling station (200) as a message (330, 340), which indicates to the hydrogen refueling station (200) an error-free refueling process (500) if the determined differential gas quantity is zero or does not exceed a predetermined limit value, and/or
(b) an error message (340) is transmitted to the hydrogen refueling station (200) as a message (330, 340), which indicates to the hydrogen refueling station (200) a faulty refuelling process (500) if the determined differential gas quantity exceeds the predetermined limit value.

5. The method according to any one of the preceding claims, wherein the message (330, 340) is signed by a security feature (335, 345) of the vehicle (100) or the external device (400).

6. The method according to claim 4 or 5, the method further comprising an electronic payment process for the refueling process (500) at the hydrogen refueling station (200), wherein a payment is made in the payment process based on the amount of gas of the hydrogen received in the vehicle tank (110) or based on the amount of gas of the hydrogen received in the vehicle tank (110) and reduced by the predetermined limit value.

7. The method according to any one of the preceding claims, wherein the meter information (310) is signed by a security feature (315) of the hydrogen refueling station (200).

8. The method according to any one of the preceding claims, wherein a smartphone or a tablet computer is used as the external device (400).

9. The method according to one of the preceding claims, wherein the hydrogen refueling station (200) comprises a control unit (230) connected to the gas meter (220), wherein the control unit (220) is arranged to transmit the at least one meter information (310).

10. The method according to claim 9, wherein the gas meter (220) and the control unit (230) are arranged in a common measuring capsule (240).

11. The method according to any one of the preceding claims, wherein the vehicle (100) or the device (400) comprises a first wireless communication device (130, 410) and the hydrogen refueling station (200) comprises a second wireless communication device (250) for establishing a wireless communication link (300).

12. The method according to any one of the preceding claims, wherein the method is performed during the ongoing refueling process (500) for a partial amount of the total amount of hydrogen gas measured during the refueling process (500).

13. A system comprising a vehicle (100) having a vehicle tank (110) for holding hydrogen and a hydrogen refueling station (100) for delivering a gas quantity of a hydrogen to the vehicle tank (110) of the vehicle (100) during a refueling process (500) and having a gas meter (220), wherein the system is adapted to perform the method according to any one of the preceding claims.

## Revendications

1. Procédé de vérification d'une quantité de gaz d'un hydrogène délivré au véhicule (100) lors d'une opération de ravitaillement (500) d'un véhicule (100) à une station de ravitaillement en hydrogène (200), le procédé comprenant les étapes suivantes :
(a) Le remplissage d'un réservoir de véhicule (110) du véhicule (100) lors de l'opération de ravitaillement à la station de ravitaillement en hydrogène (200),
(b) Mesurer la quantité de gaz de l'hydrogène délivrée au réservoir du véhicule (110) pendant l'opération de ravitaillement (500) au moyen d'un compteur de gaz (220) de la station de ravitaillement en hydrogène (200),
(c) L'établissement d'une liaison de communication (300) entre la station de ravitaillement en hydrogène (200) et le véhicule (100) ou un dispositif externe (400) connecté au véhicule (100),
(d) Transmettre au moins une information de comptage (310) du compteur de gaz (220), contenant la quantité de gaz d'hydrogène mesurée par le compteur de gaz (220), au véhicule (100) ou au dispositif externe (400) au moyen de la liaison de communication (300), et
(e) Déterminer la quantité de gaz d'hydrogène absorbée dans le réservoir (110) du véhicule dans le cadre de l'opération de ravitaillement (500),
- Détermination d'une quantité de gaz différentielle entre la quantité de gaz mesurée de l'hydrogène et la quantité de gaz absorbée de l'hydrogène,
**caractérisé en ce que** le procédé comprend en outre l'étape suivante :
- Transmettre un message (330, 340) basé sur la quantité de gaz différentiel déterminée à la station de ravitaillement en hydrogène (200) au moyen de la liaison de communication (300).

2. Procédé selon la revendication 1, dans lequel la détermination de la quantité de gaz d'hydrogène absorbée dans le réservoir (110) du véhicule dans le cadre de l'opération de ravitaillement (500) est effectuée par le véhicule (100).

3. Procédé selon l'une des revendications précédentes, dans lequel la détermination de la quantité de gaz différentiel est effectuée par un appareil de commande (120) du véhicule (100) ou par le dispositif externe (400).

4. Procédé selon la revendication 3, dans lequel
(a) en tant que message (330, 340), un message de succès (330) est transmis à la station de ravitaillement en hydrogène (200), qui indique à la station de ravitaillement en hydrogène (200) une opération de ravitaillement (500) sans erreur, lorsque la quantité de gaz différentiel déterminée est nulle ou ne dépasse pas une valeur limite prédéterminée, et/ou
(b) en tant que message (330, 340), un message d'erreur (340) est transmis à la station de ravitaillement en hydrogène (200), qui indique à la station de ravitaillement en hydrogène (200) une opération de ravitaillement (500) erronée, lorsque la quantité de gaz différentiel déterminée dépasse la valeur limite prédéterminée.

5. Procédé selon l'une quelconque des revendications précédentes, dans lequel le message (330, 340) est signé par une caractéristique de sécurité (335, 345) du véhicule (100) ou du dispositif externe (400).

6. Procédé selon la revendication 4 ou 5, le procédé comprenant en outre une opération de paiement électronique pour l'opération de ravitaillement (500) à la station de ravitaillement en hydrogène (200), dans lequel un paiement est effectué dans le cadre de l'opération de paiement sur la base de la quantité de gaz d'hydrogène reçue dans le réservoir de véhicule (110) ou sur la base de la quantité de gaz d'hydrogène reçue dans le réservoir de véhicule (110) et diminuée de la valeur limite prédéterminée.

7. Procédé selon l'une quelconque des revendications précédentes, dans lequel l'information de comptage (310) est signée par une caractéristique de sécurité (315) de la station de ravitaillement en hydrogène (200).

8. Procédé selon l'une des revendications précédentes, dans lequel on utilise comme dispositif externe (400) un téléphone intelligent ou un ordinateur tablette.

9. Procédé selon l'une quelconque des revendications précédentes, dans lequel la station de ravitaillement en hydrogène (200) comprend une unité de commande (230) reliée au compteur de gaz (220), l'unité de commande (230) étant agencée pour transmettre ladite au moins une information de comptage (310).

10. Procédé selon la revendication 9, dans lequel le compteur de gaz (220) et l'unité de commande (230) sont disposés dans une capsule de mesure commune (240).

11. Procédé selon l'une quelconque des revendications précédentes, dans lequel le véhicule (100) ou le dispositif (400) comprend un premier dispositif de communication sans fil (130, 410) et la station de ravitaillement en hydrogène (200) comprend un deuxième dispositif de communication sans fil (250) pour établir une liaison de communication sans fil (300).

12. Procédé selon l'une quelconque des revendications précédentes, dans lequel le procédé est mis en œuvre pendant l'opération de ravitaillement en cours (500) pour une quantité partielle de la quantité totale de gaz d'hydrogène mesurée lors de l'opération de ravitaillement (500).

13. Système constitué d'un véhicule (100) comportant un réservoir de véhicule (110) destiné à contenir de l'hydrogène et une station de ravitaillement en hydrogène (100) destinée à délivrer une quantité de gaz d'un hydrogène au réservoir de véhicule (110) du véhicule (100) lors d'une opération de ravitaillement (500) et comportant un compteur de gaz (220), le système étant agencé pour mettre en œuvre le procédé selon l'une quelconque des revendications précédentes.
